# EUROPÄISCHE PATENTANMELDUNG

(11) **EP 0 593 008 A1**
(43) Veröffentlichungstag der Anmeldung: **20.04.1994**
(21) Anmeldenummer: 93116491.7
(22) Anmeldetag: 12.10.1993
(51) Int. Cl.: F17C 13/00, F16L 25/00

(54) **Gasabfüllarmatur**

(30) Priorität: 15.10.1992 DE 4234738; 27.03.1993 DE 4310074
(71) Anmelder: KRYTEM GmbH, D-47877 Willich (DE)
(72) Erfinder: Gutierrez, Javier, D-40667 Meerbusch (DE)
(74) Vertreter: Herrmann-Trentepohl, Werner, Dipl.-Ing.

(57) **Zusammenfassung**

Bei einer Gasabfüllarmatur (1) mit einem Gasdurchführungsrohr (2), welches an seinem freien Ende (4) eine Preßdichtung (5) trägt, die auf einem Gewindestutzen eines Gasflaschenventils abdichtet und mit einer koaxial auf dem Gasdurchführungsrohr drehbaren Hülse (6), die an ihrem freien Ende mit einem auf ein Außengewinde des Gewindestutzens passenden Innengewinde (7) versehen ist, wobei das Gas aus einem Rohr (8) eines Gasverteilers in die Gasflasche gelangt, ist erfindungsgemäß vorgesehen, daß die Hülse (6) den Abtrieb eines Getriebes (14) bildet, dessen Antriebswelle (15) in einem Gehäuse (19) gelagert ist, welches an den Gasverteiler (8) angeschlossen ist, wobei das Gasdurchführungsrohr (2) mit seinem inneren Ende (18) gasdicht im Gehäuse (19) festgelegt ist, dessen freies Ende (20) zur Lagerung und Durchführung der Antriebswelle (15) dient, deren Bewegungsenergie zum Verschrauben der Hülse (6) mit dem Gewindestutzen des Gasflaschenventils dient.

## Beschreibung

Die Erfindung betrifft eine Gasabfüllarmatur gemäß dem Oberbegriff des Anspruches 1.

Solche Gasabfüllarmaturen stellen eine Verbindung zwischen einem auf einer Gasflasche sitzenden Ventil und einem Gasverteiler her, dem ein technisches Gas zugeführt wird, das zumeist in mehrere Gasflaschen gleichzeitig abgefüllt wird. Unter anderem kann es sich dabei um Sauerstoff, aber auch um andere technische Gase handeln, die zum Beispiel zum Schweißen verwendet werden.

Die Erfindung geht von einer vorbekannten Gasabfüllarmatur dieser Art aus. Hierbei ist das Gasdurchführungsrohr gasdicht im Rohrmantel eines elastischen Rohres festgelegt, welches von einem mehreren elastischen Rohren gemeinsamen Verteilerrohr des Gasverteilers abzweigt. Diese elastischen Rohre sind haarnadelförmig gekrümmt und erlauben es auf einfache Weise, die schweren Stahlflaschen mit dem starren Gasverteilerrohr zu verbinden. Die auf jedem Gasdurchführungsrohr angeordnete Hülse kann deshalb leicht mit dem Anschlußstutzen des Gasventiles der betreffenden Gasflasche ausgefluchtet und anschließend mit dessen Gewinde verschraubt werden.

Es hat sich jedoch herausgestellt, daß das manuelle Aufschrauben der Hülse bei der üblichen horizontalen Stellung des Gasdurchführungsrohres, bei der die Hülse mit dem Gewindestutzen des Gasflaschenventils ausgefluchtet ist und senkrecht zur Achse der aufrechten Gasflasche steht, außerordentlich anstrengend ist. Das liegt daran, daß die etwa eine Handbreit lange Hülse mit einer Hand umschlossen und schrittweise über mehrere Gewindegänge bis zur ausreichenden Pressung der am freien Ende des Gasdurchführungsrohres auf der Ringfläche des Anschlußstutzens sitzenden Dichtung gedreht werden muß. Der begrenzte Drehwinkel des menschlichen Handgelenkes, der über annähernd 120° reicht, macht eine Vielzahl von Teilumdrehungen erforderlich, was bei jeder Gasflasche und jedem Füllvorgang zweimal in entgegengesetzten Drehrichtungen zum Anschließen und Lösen erforderlich ist. Unter diesen Umständen sind erhebliche körperliche Belastungen, insbesondere im Handgelenk unvermeidlich, welche die Fülleistungen begrenzen und die Gefahr von körperlichen Schäden beinhalten.

Die Erfindung geht demgegenüber einen anderen Weg, dessen Grundgedanke im Anspruch 1 wiedergegeben ist. Weitere Merkmale der Erfindung sind Gegenstand der Unteransprüche.

Gemäß der Erfindung dient zur Zuführung der für das Anschließen und Lösen der Hülse notwendigen Bewegungsenergie ein Getriebe, wodurch bei horizontal ausgefluchteter Hülse die bislang erforderliche Drehung über den begrenzten Drehwinkel des menschlichen Handgelenkes entfällt. Dieses Getriebe ist in einem Anschlußrohr gelagert, das zu der Gasabfüllarmatur gehört und mit dem flexiblen Rohr des Gasverteilers verbunden ist. Das Anschlußrohr weist das zur Lagerung der Antriebswelle dienende Getriebegehäuse auf und ist gasdicht an das Gasdurchführungsrohr angeschlossen. Dieses Anschlußrohr läßt sich mit beliebigen Mitteln an dem flexiblen Rohr des Gasverteilers festlegen, beispielsweise mit diesem verschrauben. Da die Antriebswelle erfindungsgemäß durch das Anschlußrohr geführt ist, ergibt sich ein auskragendes freies Wellenende, auf das die Bewegungsenergie übertragen wird. Hiernach werden verschiedene Möglichkeiten der Erzeugung der Bewegungsenergie durch Handbetrieb oder Motoren bei einfacher Lagerung und Ausführung des Getriebes geschaffen.

Die Erfindung hat daher den Vorteil, daß sie kostspielige und anfällige Gasarmaturen vermeidet, die ebenfalls bekannt sind und zur Verbesserung der Ergonomie des eingangs beschriebenen Standes der Technik mit längsgeteilten Verschraubungen des Gasdurchführungsrohres mit dem Anschlußstutzen des Gasflaschenventiles arbeiten, um die Hülsendrehung in der Horizontalen zu vermeiden. Die Erfindung vermeidet auch die Nachteile ebenfalls vorbekannter Gasabfüllarmaturen, welche eine ungeteilte Hülse für den Anschluß an den Stutzen des Gasflaschenventils verwenden, die sich jedoch mit einem Wellenzapfen durch ein mit dem Ende des flexiblen Rohres dauernd verbundenes Gehäuse erstreckt, der mit einem Handrad bei der Verschraubung der Hülse gedreht wird. Denn hierbei müssen im Gehäuse an den Drehlagern des Zapfens bzw. der Hülse O-Ringdichtungen vorgesehen werden, die nicht nur schnellem Verschleiß unterliegen, sondern auch beim Evakuieren der Gasflaschen wegen der damit verbundenen Druckumkehr im Gehäuse zu Undichtigkeiten führen. Insbesondere bei der Abfüllung von Sauerstoff sind daher solche Armaturen bedenklich. Außerdem unterliegt hierbei die Preßdichtung funktionsbedingt hohem Verschleiß, da sie sich zusammen mit der Hülse drehen muß. Derartige Dichtungsprobleme treten bei der erfindungsgemäßen Gasabfüllarmatur nicht mehr auf, weil das Getriebe außerhalb der Gasführung angeordnet ist. Da die Erfindung die Drehung der Hülse mit einem pneumatischen oder elektrischen Motor ermöglicht. Dafür kommen auch tragbare Ausführungen in Frage, beispielsweise solche, die mit einem Handrad drehfest verbunden werden können, welches dann auf der Antriebswelle des Getriebes sitzt.

Da erfindungsgemäß zur Gasabfüllarmatur das vorstehend beschriebene Anschlußrohr gehört, ermöglicht die Erfindung auch eine weitere Verbesserung gegenüber dem Stand der Technik. Sie löst in einer einfachen Weise das Problem, das sich aus unterschiedlich bemessenen Anschlußstutzen der Gasflaschen in Gasabfüllanlagen der beschriebenen Art ergeben kann. In diesem Fällen paßt nämlich die Hülse nicht auf alle Gasflaschenventile. Die Erfindung schlägt dafür die Merkmale des Anspruches 2 vor. Dadurch ist es möglich, die jeweils passende Hülse in der Anschlußarmatur zu verwenden, nachdem in dieser das betreffende Gasdurchführungsrohr eingewechselt worden ist.

Mit den Merkmalen des Anspruches 4 ist es möglich, die für die Bewegung der Hülse erforderlich Energie von Hand auf die Antriebswelle zu übertragen. Die Drehung des Handrades ist ergonomisch günstig und bedeutet deswegen eine wesentliche Verbesserung gegenüber der bislang erforderlichen horizontalen Drehung des Handgelenkes.

Mit den Merkmalen des Anspruches 5 wird erreicht, daß man die vorstehend als bekannt vorausgesetzten pneumatischen oder hydraulischen Motoren nicht nur zur Bewegung der Hülse, sondern auch zur Bewegung des Handrades des Flaschenventils einsetzen kann. Das bedeutet eine weitere Erleichterung, weil die Flaschenventile vor dem Füllvorgang geöffnet und danach geschlossen werden müssen.

Im Anspruch 6 ist eine Ausführungsform der Erfindung wiedergegeben, bei der wie oben dargelegt unterschiedliche Anschlußstutzen der Gasflaschen mit auswechselbaren Gasdurchführungsrohren und Hülsen bedient werden können.

Zum besseren Verständnis wird die Erfindung im folgenden anhand zwei Ausführungsbeispielen näher erläutert; es zeigen
- Fig. 1: eine erste Ausführungsform der Erfindung im wesentlichen im Längsschnitt und in abgebrochener Darstellung des flexiblen Rohres einer Gasabfüllanlage und
- Fig. 2: in der Fig. 1 entsprechender Darstellung eine abgeänderte Ausführungsform, bei der das Gasdurchführungsrohr auswechselbar angeordnet ist.

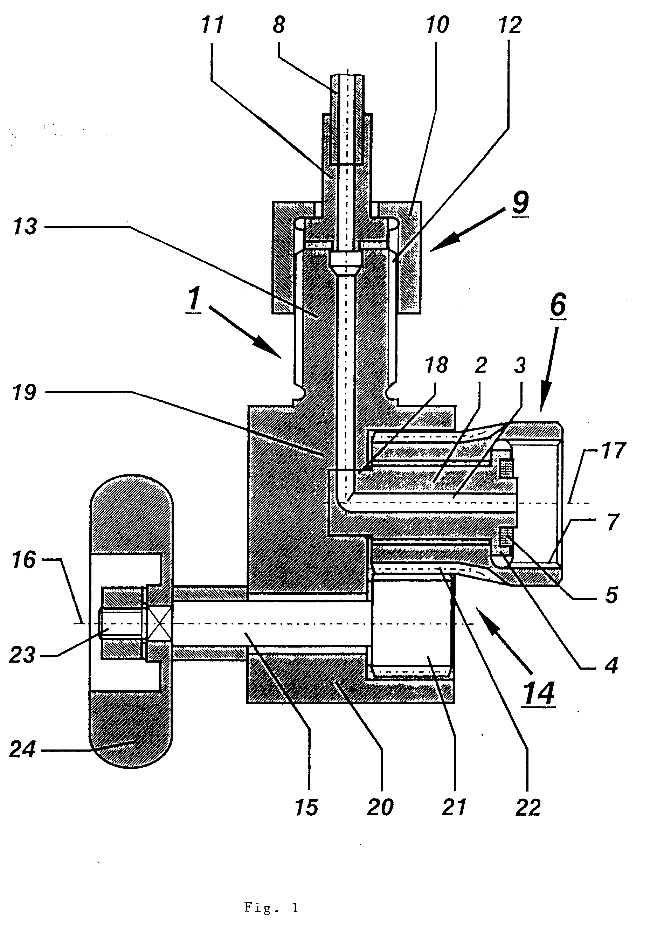

In der Darstellung der Fig. 1 ist die Gasabfüllarmatur allgemein mit 1 bezeichnet. Sie weist ein Gasdurchführungsrohr 2 auf, dessen zylindrischer Innenraum 3 ein technisches Gas führt. An seinem freien Ende bei 4 trägt das Gaszuführungsrohr eine Ringdichtung 5, die als Preßdichtung wirkt, wenn sie sich auf dem nicht dargestellten Gewindestutzen eines Gasflaschenventils abstützt. Zur Herbeiführung des erforderlichen Dichtdruckes ist koaxial auf dem Gasdurchführungsrohr 2 eine Überwurfhülse 6 drehbar gelagert. An ihrem freien Ende weist diese Hülse ein Innengewinde 7 auf, welches auf das nicht dargestellte Außengewinde des Gewindestutzens am Gasflaschenventil paßt.

Das in die Gasflasche abzufüllende technische Gas wird über ein flexibles Rohr 8 zugeführt. Die Verwendung des flexiblen Rohres 8 mit der Gasabfüllarmatur 1 erfolgt durch eine Verschraubung 9 mit Hilfe einer Überwurfmutter 10 auf einer Hülse 11, wobei die Überwurfmutter 10 auf ein Anschlußgewinde 12 eines Anschlußrohres 13 paßt, welches einen Teil der Gasarmatur 1 bildet.

Die Hülse 6 bildet den Abtrieb eines Winkelgetriebes 14, daß gemäß dem Ausführungsbeispiel eine Antriebswelle 15 aufweist. Die Antriebswelle ist im Anschlußrohr 13 gelagert, welches mit der Überwurfmutter 10 an die flexible Rohrleitung 8 und damit an den Gasverteiler angeschlossen ist. Die Achse 16 der Antriebswelle verläuft senkrecht zur Achse des Anschlußrohres 13 und damit parallel zur Achse 17 des Gasdurchführungsrohres 2. Die Achse 16 kann grundsätzlich in allen Raumrichtungen ausgeführt, d.h.auch parallel zum Anschlußrohr 13, sowie senkrecht zu 13 und zurAchse 17. Die jeweilige Stellung richtig sich zweckmäßig nach ergonomischen Gesichtspunkten. Das innere Ende 18 des Gasdurchführungsrohres 2 ist gasdicht im Gehäuse 19 festgelegt. Das freie Ende 20 des Anschlußrohres 13 dient zur Lagerung und Durchführung der Antriebswelle 15 des Winkelgetriebes. Die Bewegungsenergie der Antriebswelle dient zum Verschrauben der Hülse mit dem Gewindestutzen des Gasflaschenventils.

Zu diesem Zweck ist auf der Antriebswelle 15 des Winkelgetriebes 14 ein Ritzel 21 drehfest angebracht. Das Ritzel 21 kämmt mit der Außenverzahnung 22, die auf der Hülse 6 angebracht ist.

Zur Zuführung von Bewegungsenergie dient ein drehfest auf dem freien Ende 23 der Antriebswelle 15 gelagertes Handrad 24. Dieses Handrad, das auf der Antriebswelle 15 angebracht ist, entspricht in seinen Hauptabmessungen denen des Handrades des Flaschenventils. Es dient zum Kuppeln eines pneumatischen oder elektrischen Motors mit umkehrbarer Drehrichtung, der dadurch mit beiden Handrädern gekuppelt werden kann.

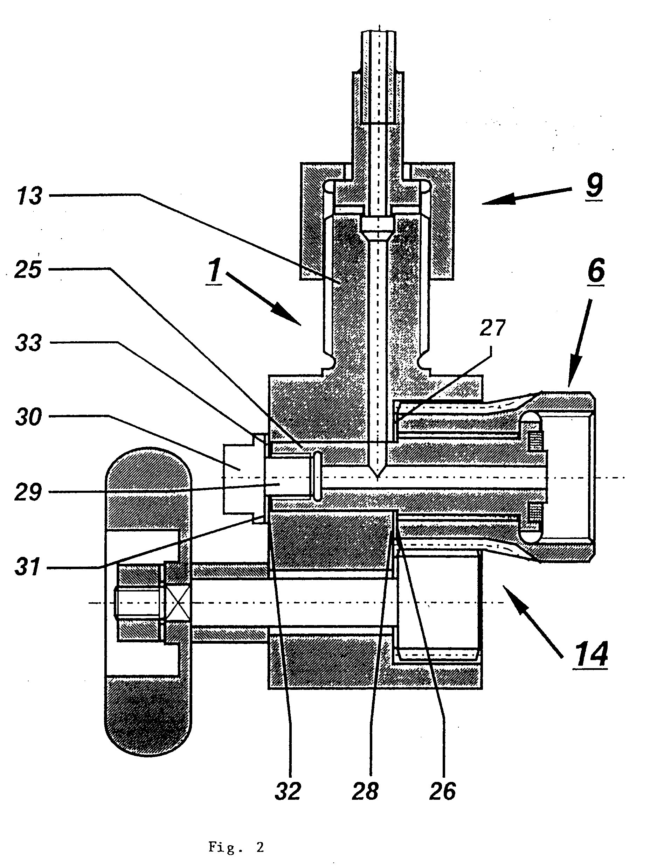

Von der Ausführungsform nach Fig. 1 unterscheidet sich die Ausführungsform nach Fig. 2 durch die auswechselbare Lagerung von unterschiedlichen auf das jeweilige Gasflaschenventil passenden Gasdurchführungsrohren 2, von denen jedoch nur eines dargestellt ist. Dabei sind die inneren Enden aller Gasdurchführungsrohre identisch ausgebildet. Diese in Fig. 2 allgemein mit 25 bezeichneten Teile durchsetzen das Gehäuse 19 und weisen an einer Seite eine Ringfläche 26 auf, welche sich unter Einschaltung einer Dichtscheibe 27 auf einer ebenen Fläche 28 des Gehäuses 19 abstützt. An der gegenüberliegenden Seite sitzt eine Verschraubung, die aus einem koaxialen Gewindezapfen 29 und einem mit diesem einteiligen Kopf 30 besteht. Der Kopf hat einen inneren Flansch 31, mit dem er sich beim Einschrauben des Gewindezapfens 29 in das innere Ende 25 des Gasdurchführungsrohres 2 auf einer gegenüberliegende ebenen Fläche 32 unter Einschaltung einer scheibenförmigen Ringdichtung 33 auf dem Gehäuse 19 abstützt.

## Patentansprüche

1. Gasabfüllarmatur (1) mit einem Gasdurchführungsrohr (2), welches an seinem freien Ende (4) eine Preßdichtung (5) trägt, die auf einem Gewindestutzen eines Gasflaschenventils abdichtet und mit einer koaxial auf dem Gasdurchführungsrohr drehbaren Hülse (6), die an ihrem freien Ende mit einem auf ein Außengewinde des Gewindestutzens passenden Innengewinde (7) versehen ist, wobei das Gas aus einem Rohr (8) eines Gasverteilers in die Gasflasche gelangt, dadurch gekennzeichnet, daß die Hülse (6) den Abtrieb eines Getriebes (14) bildet, dessen Antriebswelle (15) in einem Gehäuse (19) gelagert ist, welches an den Gasverteiler (8) angeschlossen ist, wobei das Gasdurchführungsrohr (2) mit seinem inneren Ende (18) gasdicht im Gehäuse (19) festgelegt ist, dessen freies Ende (20) zur Lagerung und Durchführung der Antriebswelle (15) dient, deren Bewegungsenergie zum Verschrauben der Hülse (6) mit dem Gewindestutzen des Gasflaschenventils dient.

2. Gasabfüllarmatur nach Anspruch 1, dadurch gekennzeichnet, daß das Gasdurchführungsrohr (2) auswechselbar im Gehäuse (19) gelagert ist.

3. Gasabfüllarmatur nach einem der Ansprüche 1 oder 2, dadurch gekennzeichnet, daß auf der Antriebswelle (15) des Winkelgetriebes (15) ein Ritzel (21) drehfest angebracht ist, das mit einer Außenverzahnung (22) der Hülse (6) kämmt.

4. Gasabfüllarmatur nach einem der Ansprüche 1 bis 3, dadurch gekennzeichnet, daß zur Zuführung von Bewegungsenergie ein drehfest auf dem freien Ende (23) der Antriebswelle (15) gelagertes Handrad (24) dient.

5. Gasabfüllarmatur nach einem der Ansprüche 1 bis 4, dadurch gekennzeichnet, daß das Handrad (24) der Antriebswelle (15) in seinen Hauptabmessungen denen des Handrades des Flaschenventils entspricht und ein pneumatischer oder elektrischer Motor mit umkehrbarer Drehrichtung mit beiden Handrädern kuppelbar ist.

6. Gasabfüllarmatur nach einem der Ansprüche 1 bis 5, dadurch gekennzeichnet, daß zur auswechselbaren Lagerung von unterschiedlichen auf das jeweilige Gasflaschenventil passenden Gasdurchführungsrohren (2), deren innere Enden (25) identisch ausgebildet sind, welche das Gehäuse (19) durchsetzen, wobei an einer Seite eine Ringfläche (26), die sich unter Einschaltung einer Dichtscheibe (27)auf einer ebenen Fläche (28) des Gehäuses (19) abstützt und an der gegenüberliegenden Seite eine Verschraubung (29, 30) vorgesehen ist, die aus einem koaxialen Gewindezapfen (29) und einem mit diesem einteiligen Kopf (30) besteht, der sich beim Einschrauben des Gewindezapfens (29) in das Gasdurchführungsrohr (2) auf einer gegenüberliegenden ebenen Fläche (32) unter Einschaltung einer Dichtung (33) auf dem Rohrmantel abstützt.
